# EUROPEAN PATENT SPECIFICATION

(11) **EP 2 328 325 B1**
(45) Date of publication and mention of the grant of the patent: **08.01.2014**
(21) Application number: 09306144.8
(22) Date of filing: 26.11.2009
(51) Int. Cl.: H04L 29/08, H04L 12/66

(54) **Management framework and method for retrieving software identification information pertaining to a sensor in a network**
Verwaltungsrahmen und Verfahren zur Wiederbeschaffung von Softwareidentifizierungsinformationen, die einem Sensor in einem Netzwerk betreffen.
Cadre de gestion et procédé pour extraire des informations d'identification de logiciel appartenant à un capteur dans un réseau

(43) Date of publication of application: 01.06.2011
(73) Proprietor: Alcatel Lucent, 75007 Paris (FR)
(72) Inventor: Liekens, Werner, 2580 Sint-Katelijne-Waver (BE); Van Bogaert, Bruno, 1030 Schaarbeek (BE); Van Leeuwen, Tom, 9032 Wondelgem (BE); Justen, Pascal, 1150 Brussel (BE); Acke, Wim, 2820 Rijmenam (BE)
(74) Representative: ALU Antw Patent Attorneys

(56) References cited:
- WO-A1-2009/014319
- JONGWOO SUNG ET AL: "Internet metadata framework for plug and play wireless sensor networks" SENSORS APPLICATIONS SYMPOSIUM, 2009. SAS 2009. IEEE, IEEE, PISCATAWAY, NJ, USA, 17 February 2009 (2009-02-17), pages 320-324, XP031437605 ISBN: 978-1-4244-2786-4
- CARL REED ET AL: "Ogc(R) sensor web enablement:overview and high level achhitecture" AUTOTESTCON, 2007 IEEE, IEEE, PI, 1 September 2007 (2007-09-01), pages 372-380, XP031155797 ISBN: 978-1-4244-1238-9

## Description

### Field

The present invention pertains to the field of networked sensors, more particularly the field of controlling networked sensors in a residential network.

### Background

Networked sensors of various kinds are becoming more pervasive in daily life, including in residential settings, where they can be part of the home automation or domotics infrastructure.

### Summary of the Invention

Where sensors have been integrated in a network, it can be advantageous to make them accessible to potential data customers by advertising the sensors' presence and capabilities in some standardized way. SensorML is a mark-up language that was designed to allow such standardized advertisements and descriptions of networked sensors, as a means to enable third-party usage of these sensors.

Markup languages are well known. The extensible Markup Language (XML) is a widely used standard for such markup languages, ensuring a maximum degree of interoperability among systems designed to handle information in the form of XML documents. SensorML is a particular XML dialect intended for the description of the characteristics of sensors, and data acquired by sensors. The sensorML language was developed in the context of global research programs, including highly sophisticated satellite-based and earth-based sensors, wherein a reuse of the obtained data by multiple organizations improves the scientific return of the equipment investment.

Where sensors are being integrated in a home network, for instance as part of a home automation system, it is generally not desirable to give third parties indiscriminate access to the data obtained or processes controlled by these sensors.

Embodiments of the invention are based on the insight that it may nevertheless be advantageous to provide directed advertisements of the presence and capabilities of the different sensors in the home to a centralized system that is adapted to provide services using the sensors' data and processes. Such a centralized system may be present in the home or in a service provider's premises.

A problem with providing services based on sensors present in the home network is the fact that the availability of sensors may vary over time, especially as sensors are being added to the home network. A particular problem is that there typically may not be appropriate software or firmware installed to correctly interact with newly installed sensors.

The present invention pertains to the provision of services on the basis of networked sensors, and to the use of sensorML for directing network elements towards software enabling interaction with networked sensors.

The article "Internet Metadata Framework for Plug and Play Wireless Sensor Networks" by Jongwoo Sung et al. (IEEE Sensors Applications Symposium, New Orleans, LA, USA, February 17-19, 2009) describes the use of static metadata for plug-and-play purposes in wireless sensor networks. It defines a sensor metadata datasheet as an electronic description consisting of attributes, operations, interfacing message formats and services. It states that they are used for detections, identifications, and configurations of sensor nodes in a running time. The metadata is formatted in a proprietary format, different from sensorML. The content of metadata, as described, may include sensor type, detailed sensing operations, sensor node message formats, sensing units, sensing accuracy, calibration information, various hardware/software descriptions and so on.

The cited article does not address the problem of installing new or updated software or firmware in a service gateway or a sensor.

It is an object of the present invention to allow the dynamic installation of software or firmware in elements of a sensor network.

### Brief Description of the Figures

Some embodiments of apparatus and/or methods in accordance with embodiments of the present invention are now described, by way of example only, and with reference to the accompanying drawings, in which:
Figure 1 represents a first network lay-out including the management framework according to the invention;
Figure 2 represents a second network lay-out including the management framework according to the invention; and
Figure 3 shows a flow chart of a method according to the invention.

### Description of Embodiments

To optimize the communication streams between the centralized system and the networked sensors, it is advantageous to provide a sensor abstraction layer, capable of translating the raw readings of the sensors into well-defined events that can be used by application programmers. It is further advantageous to provide a protocol layer, capable of detecting the addition and/or removal of sensors to and from the network. A management framework is provided to configure and update the sensor abstraction layer and/or the protocol layer.

It is advantageous to provide accessibility to the sensors through a residential gateway, such as those according to the standards issued by the OSGi Alliance. Such residential gateways comprise a Java-based service platform that can be remotely managed. The OSGi framework provides an application life cycle management model, a service registry, an execution environment, and modules. Based on this framework, a large number of OSGi layers, APIs, and services have been defined.

Preferably, the protocol layer is implemented on the OSGi framework and consists out of a number of software bundles.

Optionally, the sensor abstraction layer is also implemented on the OSGi framework, although it may also be part of the service provider infrastructure. Preferably, the sensor abstraction layer and the protocol layer exchange information using the Internet Protocol (IP). This ensures that similar communication means may be used, regardless of whether the sensor abstraction layer and the protocol layer are provided within the same physical platform or not.

The management framework preferably communicates with the sensor abstraction layer and the protocol layer using a management and configuration protocol such as TR-069.

In a system according to the invention, the management framework further communicates with a database comprising various information about different types of sensors, under the form of sensorML documents. The management framework is adapted to extract relevant information from these sensorML documents.

According to an aspect of the invention, there, is provided a management system according to claim 1, for use in a system comprising a sensor controlling means for controlling at least one sensor, said management framework comprising means to generate and transmit management instructions to the sensor controlling means, and means to receive and parse formatted information, wherein said information comprises software identification information, wherein the formatted information is formatted according to a sensorML format, and wherein the management system is adapted to install software identified by said software identification information. In one embodiment, the software identification information pertains to firmware for the at least one sensor. In another embodiment, the sensor controlling means comprises a sensor abstraction layer, and the software identification information pertains to software to be run in the software abstraction layer. In yet another embodiment, the sensor controlling means comprises a protocol layer, and the software identification information pertains to software to be run in the protocol layer.

The software to be run in the sensor abstraction layer or the protocol layer is preferably comprised of bundles to be installed in the respective layers, for instance for the purpose of ensuring correct interoperation with the specific sensor.

In an embodiment of the management system of the present invention, the software identification information comprises a uniform resource locator (URL). In another embodiment, the software identification information comprises a version identifier.

In an embodiment of the management system of the present invention, the management instructions are formatted according to a TR-069 format.

In an embodiment, the management system of the present invention is comprised in a service gateway according to claim 8. According to another aspect of the invention, there is provided a method, according to claim 9, for identifying software for interacting with a sensor in a network, said method comprising using a document containing software identification information pertaining to a number of sensor types, said sensor belonging to a sensor type among said number of sensor types, wherein the document is formatted according to a sensorML format, and the method further comprises installing software identified by said software identification information.

In an embodiment, the method of the present invention further comprises accessing the sensorML document and extracting the software identification information pertaining to the sensor from the sensorML document.

In an embodiment of the method of the present invention, the sensorML document is stored among a plurality of sensorML documents, and the method further comprises detecting attachment of the sensor to the network and determining a type identifier of the sensor, using the type identifier to select the sensorML document from among the plurality of sensorML documents.

In an embodiment of the method of the invention, the software identification information pertains to firmware for the sensor.

In an embodiment of the method of the invention, the software identification information comprises a uniform resource locator (URL). In another embodiment, the software identification information comprises a version identifier.

In an embodiment of the method according to the present invention, the network is a residential network comprising a service gateway, and the extracting is performed by the service gateway.

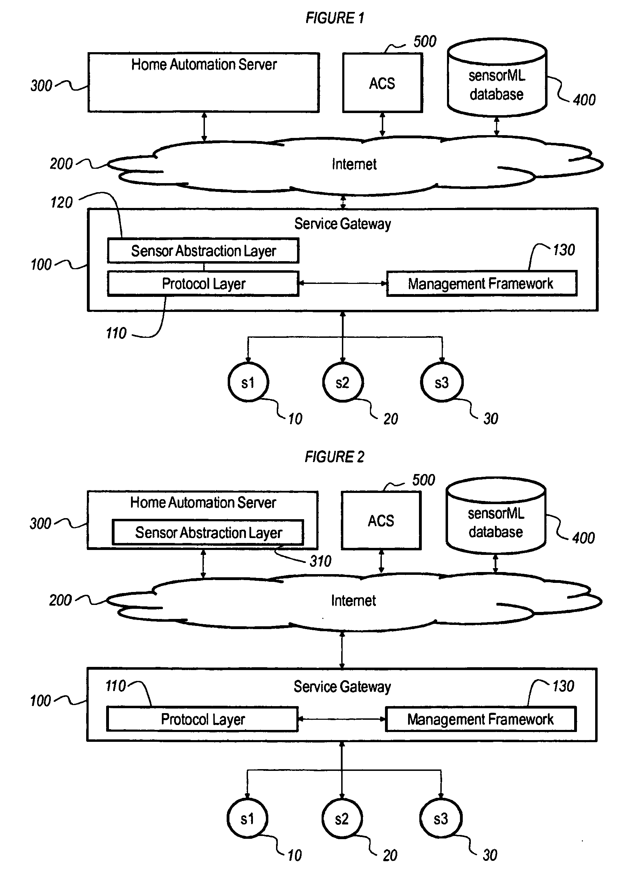

Figures 1 and 2 represent network layouts for providing sensor-based home automation services from a server **300** outside the home network, via a service gateway **100.** Service gateway **100** controls and/or reads sensors **10, 20, 30** present in the home network.

Although three sensors are shown in the figures, this does not imply any intention to limit the invention to cases where there are three sensors present. Any number of sensors may be present. Such sensors may include web cameras, motion sensors, light sensors, temperature sensors, and controllers for light, heating appliances, motors and the likes.

Sensors **10, 20, 30** may include drivers (not shown) to allow the different software components of service gateway **100** to interact with the hardware of the respective sensors.

Optionally, the service gateway **100** may associate IP addresses to the sensors **10, 20, 30,** and provide translation functions to translate messages from and to sensors **10, 20, 30,** if necessary, between their respective native communication protocols and the internet protocol, thus allowing virtually direct, proxy-based interaction between legacy sensors and the IP network.

Service gateway **100** comprises a protocol layer **110** for detecting the addition and/or removal of sensors to the home network.

Service gateway **100** also comprises a management framework **130,** for managing the functions of the service gateway **100** and receiving status messages from these functions, including the protocol layer **110.**

Service gateway **100** is preferably a gateway according to the OSGi specifications. More specifically, service gateway **100** is preferably a software platform based on JAVA technology, in which protocol layer **110** and management framework **130** are implemented as one or more software bundles. The service gateway **100** provides a demarcation between the home network and a service provider network infrastructure, wherein the home network includes the sensors **10, 20, 30,** and the service provider network infrastructure is preferably part of or interconnected with the internet **200.**

The embodiments of the invention described below involve interaction with a source of sensorML descriptions for various kinds of sensors, represented in Figures 1 and 2 as the sensorML database **400.** The sensorML descriptions provided by database **400,** according to the invention, include information about the software that is required in a service gateway **100** to adequately interact with sensors of the kind described. Optionally, the sensorML descriptions according to the invention include information about firmware to be loaded into the sensors of the kind described, to ensure optimal use of the sensors' functionality. The information about software and/or firmware may consist of a Uniform Resource Identifier (URI) or Uniform Resource Locator (URL) pointing towards a web-accessible location where the software and/or firmware may be obtained.

The management framework **130** is adapted to generate the necessary management instructions to configure and manage the entities under its control, and to convey these instructions to the controlled entities via an internal interface and/or the network. The management framework **130** according to the invention is adapted to extract the information about software and/or firmware from the sensorML data supplied by the sensorML database **400**, in particular by receiving the document over the network and/or an internal interface, and by parsing it according to the sensorML document structure. The management framework **130** according to the invention is further adapted to install the firmware or the software referred to in said information.

According to the embodiment shown in Figure 1, a home automation server **300** is provided to deliver services related to home automation from outside the home network. The home automation server accesses the sensors **10, 20, 30** via the service gateway **100**. Preferably, the home automation server **300** implements services in software by using an application programming interface (API) exposed by a sensor abstraction layer **120** comprised in the service gateway **100**, communication with which is conducted by means of the internet protocol. The sensor abstraction layer **120** preferably communicates with other components of the service gateway **100** by means of the internet protocol.

If a sensor is added, protocol layer **110** is responsible for detecting an addition of a sensor to the home network. Upon such detection, protocol layer **110** will notify management framework **130** of this event. Such a notification contains an identifier representative of the type of sensor that was added. According to the invention, the management framework **130** will verify whether the necessary software is present at the level of the service gateway **100,** and more specifically the service abstraction layer **110,** to adequately interact with the added sensor. To this end, management framework **130** accesses a sensorML database **400,** which contains sensorML descriptions of a plurality of sensor types. The access to this database **400** may be provided by a web server or database server of the well-known kinds. The communication between the management framework **130** and the sensorML database **400** may be established through an auto-configuration server (ACS) **500.** The appropriate sensorML description is selected on the basis of the identifier of the sensor.

Preferably, the protocol layer **110** further notifies the home automation server **300** of the addition event. Such a notification contains an identifier representative of the type of sensor that was added. The home automation server **300** may be adapted to contact the sensorML server **400** to obtain information about the capabilities of the added sensor, using the identifier to select the correct sensorML description.

According to the embodiment shown in Figure 2, the home automation server **300** may alternatively incorporate a sensor abstraction layer **310.** The sensor abstraction layer preferably communicates with the components of the service gateway **100** by means of the internet protocol, for instance by using TR-069 messaging over IP. The home automation server **300** accesses the sensors **10, 20, 30** via the service gateway **100.**

If a sensor is added, protocol layer **110** is responsible for detecting an addition of a sensor to the home network. Upon such detection, protocol layer **110** will notify management framework **130** of this event. Such a notification contains an identifier representative of the type of sensor that was added. According to the invention, the management framework **130** will verify whether the necessary software is present at the level of the service gateway **100** to adequately interact with the added sensor. To this end, management framework **130** accesses a sensorML database **400,** which contains sensorML descriptions of a plurality of sensor types. The access to this database **400** may be provided by a web server or database server of the well-known kinds. The communication between the management framework **130** and the sensorML database **400** may be established through an auto-configuration server (ACS) **500.** The appropriate sensorML description is selected on the basis of the identifier of the sensor.

Upon notification by the protocol layer **110** of an addition of a sensor, optionally via the management framework **130** and/or the auto-configuration server (ACS) **500,** the home automation server **300** may additionally contact sensorML database **400** to obtain information about software required for optimal interaction with the added sensor.

The skilled person will understand that the network elements appearing the figures also comprise the typical components required for communicating over a network, preferably an IP network. Although these elements are not shown in the figures, it shall be understood that the network elements rely on these components to transmit and receive the respective messages required for their operation according to the present invention.

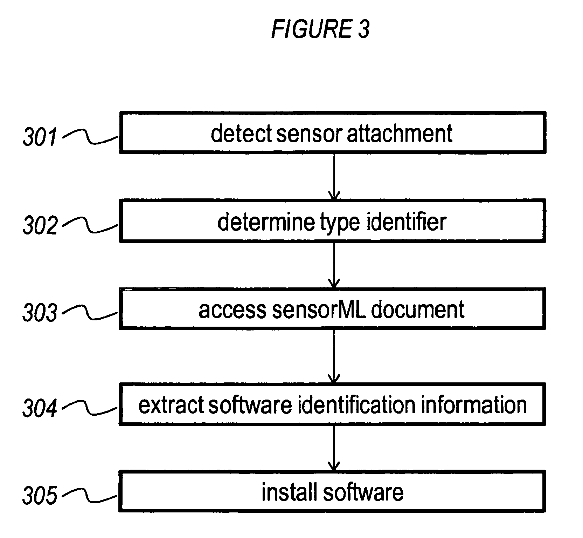

Figure 3 presents a flow chart of a method according to the present invention, the steps of which will now be described.

In a first or preliminary step **301,** the attachment of a sensor to the network is detected. Attachment signifies a connection on at least the physical level, allowing a minimal flow of information between the sensor and the network, including such information as may be necessary to allow the detection of the sensor's presence on the network. Attachment may also comprise the setting up of a connection at the data link layer and/or higher layers of the protocol stack.

The type of the attached sensor is determined and stored for further use as a type identifier **302,** preferably by receiving a message comprising the type identifier from the attached sensor.

Where the sensor network is part of a residential network comprising a service gateway **100,** attachment detection **301** preferably takes place at a protocol layer **110** comprised in the service gateway **100.**

A sensorML document, available at a predetermined document store, such as a web server, an internal volatile or nonvolatile memory, a disk drive, or similar, is accessed **303** to obtain information about the attached sensor. Software identification information pertaining to the attached sensor is extracted **304** from the sensorML document.

When a service gateway **100** is used, the accessing **303** may be performed by a management framework **130,** comprised in the service gateway **100.** However, the accessing **303** may likewise be performed by an auto-configuration server **500** in communication with the service gateway **100.**

In an embodiment, the type identifier of step **302** is used to select the sensorML document to be accessed. In another embodiment, the type identifier of step **302** is used to select the appropriate information structures for the attached sensor within a common sensorML document.

The software identification information preferably comprises information about software required for optimal interaction with the attached sensor **10, 20, 30.** In an embodiment, the software identification information pertains to firmware for the attached sensor **10, 20, 30.** In another embodiment, the software identification information pertains to software to be run in a service gateway **100,** preferably at the level of the protocol layer **110** or the sensor abstraction layer **120.**

The software identification information may comprise a Uniform Resource Identifier (URI) or Uniform Resource Locator (URL) of a network resource providing the software, and it may comprise information about the preferred version of the relevant software to be installed.

If relevant software as identified by the software identification information has been obtained, the software is installed **305** onto the target platform, such as the service gateway **100** or the attached sensor **10, 20, 30.**

Although the steps of the method according to the invention have been described in the order in which they appear in Figure 3, the order of the steps is not essential unless where it is apparent from the description that a particular step cannot take place until another step has been completed.

The functions of the various elements shown in the FIGs., including any functional blocks labeled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared.

Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

## Claims

1. A management system (130) for use in a sensor system comprising a sensor controlling means (100) for controlling at least one sensor (10, 20, 30), said management system (130) comprising means to generate and transmit management instructions to said sensor controlling means (100), and means to receive and parse formatted information, wherein said formatted information comprises software identification information, **characterized in that** said formatted information is formatted according to a sensorML format, **and in that** said management system (130) is adapted to install software identified by said software identification information onto said sensor controlling means (100), said software being required in said sensor controlling means (100) to adequately interact with said at least one sensor (10, 20, 30).

2. The management system (130) according to claim 1, wherein said software identification information further pertains to firmware for said at least one sensor (10, 20, 30).

3. The management system (130) according to claim 1, wherein said sensor controlling means (100) comprises a sensor abstraction layer (120), and wherein said software identification information pertains to software to be run in said sensor abstraction layer (120).

4. The management system (130) according to claim 1, wherein said sensor controlling means (100) comprises a protocol layer (110), and wherein said software identification information pertains to software to be run in said protocol layer (110).

5. The management system (130) according to any of the preceding claims, wherein said software identification information comprises a uniform resource locator (URL).

6. The management system (130) according to any of the preceding claims, wherein said software identification information comprises a version identifier.

7. The management system (130) according to any of the preceding claims, wherein said management instructions are formatted according to a TR-069 format.

8. A service gateway (100) comprising the management system (130) according to any of the preceding claims.

9. A method for identifying software for interacting with a sensor (10, 20, 30) in a network, said sensor (10, 20, 30) being controlled and/or read by sensor controlling means (100), said method comprising using a document containing software identification information pertaining to a number of sensor types, said sensor (10, 20, 30) belonging to a sensor type among said number of sensor types, **characterized in that** said document is formatted according to a sensorML format, **and in that** said method further comprises installing (305) software identified by said software identification information onto said sensor controlling means (100), said software being required in said sensor controlling means (100) to adequately interact with said sensor (10, 20, 30).

10. The method according to claim 9, further comprising:
accessing (303) said document; and
extracting (304) said software identification information pertaining to said sensor (10, 20, 30) from said document.

11. The method according to claim 10, wherein said document is stored among a plurality of sensorML documents, said method further comprising:
detecting (301) attachment of said sensor (10, 20, 30) to said network; and
determining (302) a type identifier of said sensor (10, 20, 30);
using said type identifier to select said document from among said plurality of sensorML documents.

12. The method of any of claims 9-11, wherein said software identification information further pertains to firmware for said sensor (10, 20, 30).

13. The method of any of claims 9-12, wherein said software identification information comprises a uniform resource locator (URL).

14. The method of any of claims 10-13, wherein said network is a residential network comprising a service gateway (100), and wherein said extracting (304) is performed by said service gateway (100).

## Patentansprüche

1. Verwaltungssystem (130) zur Verwendung in einem Sensorsystem, umfassend ein Sensorsteuerungsmittel (100) zur Steuerung mindestens eines Sensors (10, 20, 30), wobei das besagte Verwaltungssystem (130) Mittel zum Erzeugen und Übertragen von Verwaltungsbefehlen an das besagte Sensorsteuerungsmittel (100) sowie Mittel zum Empfangen und Parsen von formatierten Informationen umfasst, wobei die besagten formatierten Informationen Software-Identifizierungsinformationen enthalten, **dadurch gekennzeichnet, dass** die besagten formatierten Informationen gemäß einem SensorML-Format formatiert sind, **und dass** das besagte Verwaltungssystem (130) für das Installieren einer von den besagten Software-Identifizierungsinformationen identifizierten Software auf dem besagten Sensorsteuerungsmittel (100) ausgelegt ist, wobei die besagte Software in dem besagten Sensorsteuerungsmittel (100) erforderlich ist, um adäquat mit dem besagten mindestens einen Sensor (10, 20, 30) zusammenzuwirken.

2. Verwandlungssystem (130) nach Anspruch 1, wobei die besagten Software-Identifizierungsinformationen weiterhin Firmware für den besagten mindestens einen Sensor (10, 20, 30) betreffen.

3. Verwaltungssystem (130) nach Anspruch 1, wobei das besagte Sensorsteuerungsmittel (100) eine Sensor-Abstraktionsschicht (120) umfasst, und wobei die besagten Software-Identifizierungsinformationen eine in der besagten Sensor-Abstraktionsschicht (120) auszuführende Software betrifft.

4. Verwaltungssystem (130) nach Anspruch 1, wobei das besagte Sensorsteuerungsmittel (100) eine Protokollschicht (110) umfasst, und wobei die besagten Software-Identifizierungsinformationen eine in der besagten Protokollschicht (110) auszuführende Software betrifft.

5. Verwaltungssystem (130) nach einem beliebigen der vorstehenden Ansprüche, wobei die besagten Software-Identifizierungsinformationen einen einheitlichen Ressourcenanzeiger (URL) umfassen.

6. Verwaltungssystem (130) nach einem beliebigen der vorstehenden Ansprüche, wobei die besagten Software-Identifizierungsinformationen eine Versionskennung umfassen.

7. Verwaltungssystem (130) nach einem beliebigen der vorstehenden Ansprüche, wobei die besagten Verwaltungsbefehle gemäß einem TR-069-Format formatiert sind.

8. Service-Gateway (100) mit einem Verwaltungssystem (130) gemäß einem beliebigen der vorstehenden Ansprüche.

9. Verfahren zur Identifizierung von Software für das Zusammenwirken mit einem Sensor (10, 20, 30) in einem Netzwerk, wobei der besagte Sensor (10, 20, 30) von einem Sensorsteuerungsmittel (100) gesteuert und/oder gelesen wird, wobei das besagte Verfahren das Verwenden eines Dokuments, welches Software-Identifizierungsinformationen in Bezug auf eine Anzahl von Sensortypen enthält, umfasst, wobei der besagte Sensor (10, 20, 30) zu einem Sensortyp der besagten Anzahl von Sensortypen gehört, **dadurch gekennzeichnet, dass** das besagte Verfahren weiterhin das Installieren (305) einer von den besagten Software-Identifizierungsinformationen identifizierten Software auf dem besagten Sensorsteuerungsmittel (100) umfasst, wobei die besagte Software in dem besagten Sensorsteuerungsmittel (100) erforderlich ist, um adäquat mit dem besagten Sensor (10, 20, 30) zusammenzuwirken.

10. Verfahren nach Anspruch 9, weiterhin umfassend:
Zugreifen (303) auf das besagte Dokument; und
Extrahieren (304) der besagten den besagten Sensor (10, 20, 30) betreffenden Software-Identifizierungsinformationen aus dem besagten Dokument.

11. Verfahren nach Anspruch 10, wobei das besagte Dokument unter einer Vielzahl von SensorML-Dokumenten gespeichert ist, wobei das besagte Verfahren weiterhin umfasst:
Erkennen (301) der Anbindung des besagten Sensors (10, 20, 30) an das besagte Netzwerk; und
Ermitteln (302) einer Typkennung des besagten Sensors (10, 20, 30);
Verwenden der besagten Typkennung, um das besagte Dokument aus der besagten Vielzahl von SensorML-Dokumenten auszuwählen.

12. Verfahren nach einem beliebigen der Ansprüche 9-11, wobei die besagten Software-Identifizierungsinformationen weiterhin Firmware für den besagten Sensor (10, 20, 30) betreffen.

13. Verfahren nach einem beliebigen der Ansprüche 9-12, wobei die besagten Software-Identifizierungsinformationen einen einheitlichen Ressourcenanzeiger (URL) umfassen.

14. Verfahren nach einem beliebigen der Ansprüche 10-13, wobei das besagte Netzwerk ein stationäres Netzwerk mit einem Dienst-Gateway (100) ist, und wobei das besagte Extrahieren (304) durch das besagte Dienst-Gateway (100) erfolgt.

## Revendications

1. Système de gestion (130) destiné à être utilisé dans un système de capteurs comprenant un moyen de commande de capteurs (100) pour commander au moins un capteur (10, 20, 30), ledit système de gestion (130) comprenant des moyens pour générer et transmettre des instructions de gestion audit moyen de commande de capteurs (100), et des moyens pour recevoir et analyser des informations formatées, lesdites informations formatées comprenant des informations d'identification de logiciel, **caractérisé en ce que** lesdites informations formatées sont formatées conformément à un format sensorML, et **en ce que** ledit système de gestion (130) est adapté pour installer un logiciel identifié par lesdites informations d'identification de logiciel sur ledit moyen de commande de capteurs (100), ledit logiciel étant requis dans ledit moyen de commande de capteurs (100) pour interagir de manière adéquate avec ledit au moins un capteur (10, 20, 30).

2. Système de gestion (130) selon la revendication 1, dans lequel lesdites informations d'identification de logiciel appartiennent en outre au micrologiciel pour ledit au moins un capteur (10, 20, 30).

3. Système de gestion (130) selon la revendication 1, dans lequel ledit moyen de commande de capteurs (100) comprend une couche d'abstraction de capteur (120), et dans lequel lesdites informations d'identification de logiciel appartiennent au logiciel à exécuter dans ladite couche d'abstraction de capteur (120).

4. Système de gestion (130) selon la revendication 1, dans lequel ledit moyen de commande de capteurs (100) comprend une couche de protocole (110), et dans lequel lesdites informations d'identification de logiciel appartiennent au logiciel à exécuter dans ladite couche de protocole (110).

5. Système de gestion (130) selon l'une quelconque des revendications précédentes, dans lequel lesdites informations d'identification de logiciel comprennent un localisateur de ressources uniformes (URL).

6. Système de gestion (130) selon l'une quelconque des revendications précédentes, dans lequel lesdites informations d'identification de logiciel comprennent un identifiant de version.

7. Système de gestion (130) selon l'une quelconque des revendications précédentes, dans lequel lesdites instructions de gestion sont formatées conformément à un format TR-069.

8. Passerelle de service (100) comprenant le système de gestion (130) selon l'une quelconque des revendications précédentes.

9. Procédé d'identification d'un logiciel permettant l'interaction avec un capteur (10, 20, 30) dans un réseau, ledit capteur (10, 20, 30) étant commandé et/ou lu par un moyen de commande de capteurs (100), ledit procédé comprenant l'utilisation d'un document contenant des informations d'identification de logiciel appartenant à plusieurs types de capteur, ledit capteur (10, 20, 30) appartenant à un type de capteur parmi lesdits plusieurs types de capteur, **caractérisé en ce que** ledit document est formaté conformément à un format sensorML, **et en ce que** ledit procédé comprend en outre l'installation (305) d'un logiciel identifié par lesdites informations d'identification de logiciel sur ledit moyen de commande de capteurs (100), ledit logiciel étant requis dans ledit moyen de commande de capteurs (100) pour interagir de manière adéquate avec ledit capteur (10, 20, 30).

10. Procédé selon la revendication 9, comprenant en outre les étapes suivantes :
accéder (303) audit document ; et
extraire (304) dudit document lesdites informations d'identification de logiciel appartenant audit capteur (10, 20, 30).

11. Procédé selon la revendication 10, dans lequel ledit document est stocké parmi une pluralité de documents sensorML, ledit procédé comprenant en outre les étapes suivantes :
détecter (301) un raccordement dudit capteur (10, 20, 30) audit réseau ; et
déterminer (302) un identifiant de type dudit capteur (10, 20, 30) ;
utiliser ledit identifiant de type pour sélectionner ledit document parmi ladite pluralité de documents sensorML.

12. Procédé selon l'une quelconque des revendications 9 à 11, dans lequel lesdites informations d'identification de logiciel appartiennent en outre au micrologiciel pour ledit capteur (10, 20, 30).

13. Procédé selon l'une quelconque des revendications 9 à 12, dans lequel lesdites informations d'identification de logiciel comprennent un localisateur de ressources uniformes (URL).

14. Procédé selon l'une quelconque des revendications 10 à 13, dans lequel ledit réseau est un réseau résidentiel comprenant une passerelle de service (100), et dans lequel ladite extraction (304) est réalisée par ladite passerelle de service (100).
